# EUROPEAN PATENT APPLICATION

(11) **EP 2 731 178 A1**
(43) Date of publication of application: **14.05.2014**
(21) Application number: 13179858.9
(22) Date of filing: 09.08.2013
(51) Int. Cl.: H01M 4/133, H01M 4/587, H01M 10/0525

(54) **Negative electrode for rechargeable lithium battery and rechargeable lithium battery including same**

(30) Priority: 07.11.2012 US 201261723661 P; 29.07.2013 US 201313953714
(71) Applicant: Samsung SDI Co., Ltd., Gyeonggi-do (KR)
(72) Inventor: Han, Jeong-Woo, YONGIN-SI (KR); Kim, Young-Kee, YONGIN-SI (KR); An, Jung-Woo, YONGIN-SI (KR); Ishida, Sumihito, YONGIN-SI (KR)
(74) Representative: Gulde & Partner

(57) **Abstract**

According to the present invention there is provided a negative electrode for a rechargeable lithium battery comprising a current collector; and a negative active material layer disposed on the current collector. The negative active material layer includes amorphous carbon particles with an aspect ratio (a/b) of a width (a) relative to a length (b) in a range of 1.1 to 6 and in an amount of 55.5 to 99.5 wt% based on the total weight of the negative active material layer.

## Description

This disclosure relates to a negative electrode for a rechargeable lithium battery and a rechargeable lithium battery including the same.

### Description of the Related Art

Researchers are studying on a rechargeable battery that may be applied to an ISG (Integrated Starter & Generator) system that is used for the engine of vehicle.

ISG system is a system integrating a power generator and a motor. Specifically, the ISG system is engine control system that stops the engine when the engine runs idle for a predetermined time, and when brake pedal is released or when an accelerator pedal is stepped on, an Idle Stop & Go function for restarting the engine is performed.

Among the rechargeable batteries that may be applied to the ISG system is an AGM battery, which has a great volume compared with its capacity but has a drawback of shortening cycle-life due to repeated charge and discharge.

In order to overcome the problem, a rechargeable lithium battery having a small volume and great energy density is considered for ISG system. The rechargeable battery has to have high charge and discharge rates (C-rate) to be applied to the ISG system. Therefore, it is required to study on a rechargeable lithium battery having a low self-discharge rate as well as high charge and discharge rates.

### SUMMARY

According to the present invention there is provided a negative electrode for a rechargeable lithium battery comprising:
a current collector; and
a negative active material layer disposed on the current collector, wherein the negative active material layer includes amorphous carbon particles with an aspect ratio (a/b) of a width (a) relative to a length (b) in a range of 1.1 to 6 and in an amount of 55.5 to 99.5 wt% based on the total weight of the negative active material layer.

Preferably, the aspect ratio (a/b) is in a range of 3 to 5.

According to another preferred embodiment, the amount of the amorphous carbon particles in the negative active material layer is in the range of 70.0 to 95.0 wt% based on the total weight of the negative active material layer, especially in the range of 85.0 to 91.0 wt.% based on the total weight of the negative active material layer.

The amorphous carbon may have an interplanar distance d(002) ranging from 3.10 to 3.55 A, especially ranging from 3.40 to 3.55 A.

The amorphous carbon may have a lattice constant L_{c} ranging from 10 to 50 A, especially ranging from 10 to 30 A.

The negative active material layer may further include a binder. The amount of the binder in the negative active material layer is preferably in the range of 3.0 to 8.0 wt.% based on the total weight of the negative active material layer.

The negative active material layer may further include a conductive material. The amount of the conductive material in the negative active material layer is preferably in the range of 3.0 to 20.0 wt% based on the total weight of the negative active material layer.

The amorphous carbon particles may be made of soft carbon.

An average width of the amorphous carbon particles corresponding to 50 volume% of the cumulative volume of the amorphous carbon particles is preferably in the range of 5-20 µm, especially in the range of 7 - 15 µm.

According to another aspect of the present invention there is provided a rechargeable lithium battery comprising the inventive negative electrode, a positive electrode, and an electrolyte.

Other embodiments are described in the following detailed description.

Therefore, the present invention provides a rechargeable lithium battery having excellent cycle-life and output characteristics.

### BRIEF DESCRIPTION OF THE DRAWINGS

FIG. 1 is an exploded perspective view showing a rechargeable lithium battery according to one embodiment.
FIG. 2 is a SEM photograph of a negative active material according to Example 1.
FIG. 3 is a SEM photograph of a negative active material according to Example 3.
FIG. 4 is a SEM photograph of a negative active material according to Example 5.
FIG. 5 is a SEM photograph of a negative active material according to Comparative Example 1.
FIG. 6 is a graph showing cycle-life characteristic of each rechargeable lithium battery cell according to Example 1 and Comparative Example 1.
FIG. 7 is a graph showing output characteristic of the rechargeable lithium battery cells according to Example 1 and Comparative Example 1.

### DETAILED DESCRIPTION

Exemplary embodiments will hereinafter be described in detail. According to one embodiment of the present invention, there is provided a negative electrode for a rechargeable lithium battery comprising a current collector and a negative active material layer formed on the current collector. The negative active material of the negative active material layer includes scale-shaped amorphous carbon particles. These amorphous carbon particles are included in the negative active material layer with a predetermined range and thus, realizes a rechargeable lithium battery having excellent cycle-life and output characteristics.

In particular, the amorphous carbon particles have a scale-shape expressed by an aspect ratio of a width relative to a length. In other words, when the width of the scale-shape is represented by a, and the length is represented by b, a ratio of the width (a) relative to (b) is obtained as an aspect ratio (a/b). When the aspect ratio (a/b) is 1, the amorphous carbon has a spherical shape. Hence, the aspect ratio refers to the ratio of the width (a) of a shape to its length (b), wherein the width (a) is larger than the length (b). The inventive polydisperse particles are of non-spherical shape.

The amorphous carbon particles used as the negative active material has an aspect ratio (a/b) ranging from 1.1 to 6. Specifically, the aspect ratio (a/b) may be in a range of 3 to 5. When the amorphous carbon has an aspect ratio (a/b) within the range, the negative active material including the amorphous carbon has a shorter path through which electrons flow and decrease resistance and also, include a binder in a smaller amount and thus, prevent deterioration of electrical conductivity due to the binder. Accordingly, the negative electrode has less internal resistance and thus, realizes a rechargeable lithium battery having excellent cycle-life and output characteristics.

The negative active material layer may further include a conductive material other than the amorphous carbon particles and a binder. Herein, the amorphous carbon particles are included in an amount ranging from 55.5 to 99.5 wt%, preferably 70.0 to 95.0 wt%, most preferred 85.0 to 91.0 wt% based on the total weight of the negative active material layer. When negative active material, amorphous carbon particles with the aspect ratio, is used within the range, the negative electrode may maintain high electrical conductivity, and a rechargeable lithium battery including the negative electrode may have excellent cycle-life and output characteristics.

The amorphous carbon may have an interplanar distance d(002) ranging from 3.10 to 3.55 A, specifically, 3.40 to 3.55 A. In addition, the amorphous carbon may have a lattice constant L_{c} ranging from 10 to 50 A, specifically, 10 to 30 A, and more specifically, 15 to 25 A. When the amorphous carbon has an interplanar distance d(002) and a lattice constant L_{c} within the ranges, a rechargeable lithium battery having excellent cycle-life and output characteristics may be accomplished.

The amorphous carbon particles may have an average width corresponding to 50 volume% of the cumulative volume of the amorphous carbon particles in the range of 5 to 20 µm, especially 7 to 15 µm. When the amorphous carbon particles have an average width within the range, a rechargeable lithium battery having excellent cycle-life and output characteristics may be accomplished.

The amorphous carbon may be specifically soft carbon.

The amorphous carbon having an aspect ratio within the range may be obtained through a grinding process.

The conductive material of the negative active material layer is used to improve conductivity of an electrode and any electrically conductive material may be used as a conductive material unless it causes a chemical change. Examples thereof are a carbon-based material such as natural graphite, artificial graphite, carbon black, acetylene black, ketjen black, a carbon fiber, and the like; a metal-based material of a metal powder or a metal fiber made of copper, nickel, aluminum, silver, and the like; a conductive polymer such as a polyphenylene derivative; or a mixture thereof.

The binder improves binding properties of negative active material particles with one another and with a current collector. Examples thereof may include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

In general, a binder for forming a negative active material layer hinders an electric flow. However, amorphous carbon having an aspect ratio within a predetermined range according to the present invention decreases a path for the electric flow when used to form a negative active material layer and thus, deterioration of electrical conductivity due to the binder.

The negative electrode may be fabricated in a method of mixing the negative active material, the conductive material, and the binder in a solvent to prepare a negative active material layer composition, and applying the negative active material layer composition on the current collector. The solvent may be N-methylpyrrolidone.

The current collector may be a copper foil.

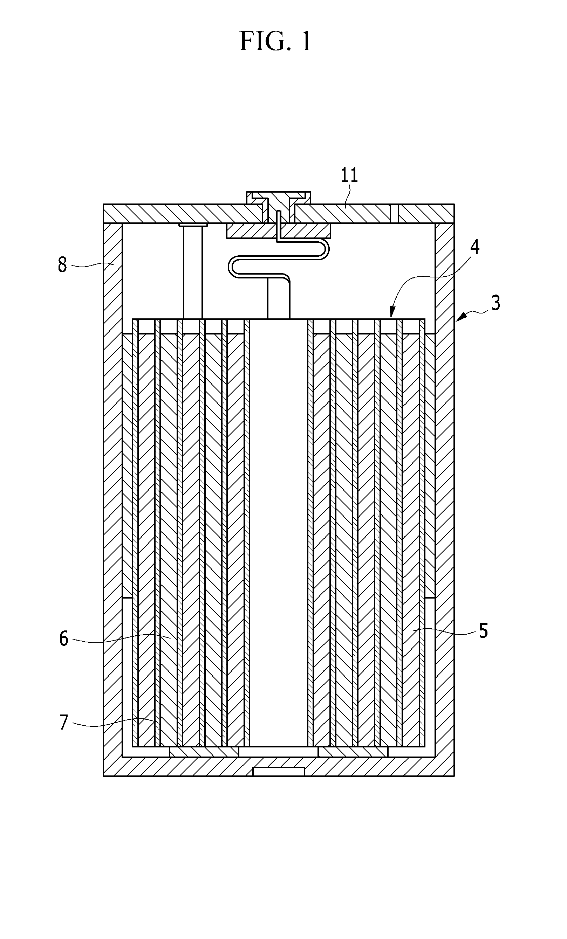

Hereinafter, a rechargeable lithium battery including the negative electrode is illustrated referring to FIG. 1.

FIG. 1 is an exploded perspective view of a rechargeable lithium battery according to one embodiment.

Referring to FIG. 1, a rechargeable lithium battery 3 is a prismatic battery including an electrode assembly 4 including a positive electrode 5, the above-described negative electrode 6, and a separator 7 interposed between the positive electrode 5 and negative electrode 6 in a battery case 8, an electrolyte injected through an upper part of the battery case 8, and a cap plate 11 sealing the battery case. The rechargeable lithium battery according to one embodiment is not limited by a prismatic battery and may be any operable battery. For example, it may be a cylindrical, coin-type, or pouch battery.

The positive electrode 5 includes a current collector and a positive active material layer disposed on the current collector. The positive active material layer includes a positive active material, a binder, and optionally a conductive material.

The current collector may be Al (aluminum).

The positive active material may include at least one selected from lithium composite oxide and activated carbon.

The lithium composite oxide may include a composite oxide including at least one selected from cobalt, manganese, and nickel, as well as lithium. In particular, the following lithium-containing compounds may be used:
LiₐA_{1-b}B_{b}D₂ (wherein, in the above formula, 0.90 ≤ a ≤ 1.8 and 0 ≤ b ≤ 0.5); LiₐE_{1-b}B_{b}O_{2-c}D_{c} (wherein, in the above formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above formula, 0 ≤ b ≤ 0.5, 0 ≤ c ≤ 0.05); LiₐNi_{1-b-c}Co_{b}B_{c}D_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (wherein, in the above formula, 0.90 ≤ a ≤ 1.8, 0 ≤ b ≤ 0.5, 0 ≤ c ≤ 0.05, 0 < α < 2); LiₐNi_{1-b-c}Co_{b}B_{c}O_{2-α}F₂ (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein, in the above formula, 0.90 ≤ a ≤ 1.8, 0 ≤ b ≤ 0.5, 0 ≤ c ≤ 0.05, 0 < a ≤ 2); LiₐNi_{1-b-c}Mn_{b}B_{c}O_{2-α}F_{α} (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein, in the above formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5, 0.001 ≤ d ≤ 0.1); LiₐNi_{b}C_{Oc}Mn_{d}GeO₂ (wherein, in the above formula, 0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (wherein, in the above formula, 0.90 ≤ a ≤ 1.8, 0.001 ≤ b ≤ 0.1); LiₐCoG_{b}O₂ (wherein, in the above formula, 0.90 ≤ a ≤ 1.8, 0.001 ≤ b ≤ 0.1); LiₐMnG_{b}O₂ (wherein, in the above formula, 0.90 ≤ a ≤ 1.8, 0.001 ≤ b ≤ 0.1); LiₐMn₂G_{b}O₄ (wherein, in the above formula, 0.90 ≤ a ≤ 1.8, 0.001 ≤ b ≤ 0.1); QS₂; LiQS₂; V₂O₅; LiV₂O₅; LilO₂; LiNiVO₄; Li_{(3-f)}J₂(PO₄)₃ (0 ≤ f ≤ 2); Li(_{3-f})Fe₂(PO₄)₃ (0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The compound may have a coating layer on the surface or be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like but is not illustrated in more detail, since it is well-known to those who work in the related field.

The activated carbon is a carbon-based material having porosity, a large specific surface area, and high adsorption capability as amorphous carbon in which graphite-shaped planar crystallites are complicatedly combined.

The binder improves binding properties of the positive active material particles to one another and to a current collector. Examples of the binder may include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The conductive material is used in order to improve conductivity of an electrode. Any electrically conductive material may be used as a conductive material unless it causes a chemical change. Examples of the conductive material include one or more kinds of natural graphite, artificial graphite, carbon black, acetylene black, ketjen black, a carbon fiber, a metal powder or a metal fiber including copper, nickel, aluminum, silver, and the like, and a polyphenylene derivative.

The positive electrode may be manufactured by mixing the positive active material, the binder, and the conductive material in a solvent to prepare a positive active material layer composition, and applying the composition on the current collector. The solvent may be N-methylpyrrolidone.

The electrolyte includes a non-aqueous organic solvent and a lithium salt.

The non-aqueous organic solvent serves as a medium for transmitting ions taking part in the electrochemical reaction of a battery. The non-aqueous organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

When the chain carbonate compounds and cyclic carbonate compounds are mixed, an organic solvent having high dielectric constant and low viscosity can be provided. The cyclic carbonate and the chain carbonate are mixed together in a volume ratio ranging from about 1:1 to 1:9.

Examples of the ester-based solvent may include n-methylacetate, n-ethylacetate, n-propylacetate, methylacetate, methylpropionate, ethylpropionate, y-butyrolactone, decanolide, valerolactone, mevalonolactone, caprolactone, or the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone, or the like. Examples of the alcohol-based solvent include ethyl alcohol, isopropyl alcohol, or the like.

The non-aqueous organic solvent may be used singularly or in a mixture. When the organic solvent is used in a mixture, the mixture ratio can be controlled in accordance with a desirable battery performance.

The non-aqueous electrolyte may further include an overcharge inhibitor additive such as ethylenecarbonate, pyrocarbonate, or the like.

The lithium salt is dissolved in an organic solvent, supplies lithium ions in a battery, basically operates the rechargeable lithium battery, and improves lithium ion transportation between positive and negative electrodes therein.

The lithium salt may include LiPF₆, LiBF₄, LiSbF₆, LiAsF₆, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), (where x and y are natural numbers), LiCl, Lil, LiB(C₂O₄)₂ (lithium bis(oxalato) borate, LiBOB), or a combination thereof.

The lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

The separator 7 may include any materials commonly used in the conventional lithium battery as long as separating a negative electrode from a positive electrode and providing a transporting passage for lithium ion. In other words, the separator 7 may have a low resistance to ion transportation and an excellent impregnation for an electrolyte. For example, it may be selected from glass fiber, polyester, TEFLON (tetrafluoroethylne), polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

The rechargeable lithium battery may be usefully applied to an ISG (Integrated Starter & Generator) system for an auto engine.

The following examples illustrate the present invention in more detail. These examples, however, should not in any sense be interpreted as limiting the scope of the present invention.

### Fabrication of Negative Electrode

### Example 1

88 wt% of amorphous carbon (SC1, GS Energy Co., Ltd.) with an aspect ratio (a/b) of 4, 7 wt% of denka black (an acetylene carbon), 2 wt% of carboxylmethyl cellulose, and 3 wt% of styrene-butadiene rubber were mixed, and the mixture was dispersed into N-methyl-2-pyrrolidone, preparing a composition for a negative active material layer. Next, the composition for a negative active material layer was coated on a copper foil, dried, and compressed, fabricating a negative electrode.

### Example 2

A negative electrode was fabricated according to the same method as Example 1 except for using 80 wt% of the amorphous carbon (SC1, GS Energy Co., Ltd.) having an aspect ratio (a/b) of 4, 14 wt% of denka black, 3 wt% of carboxylmethyl cellulose, and 3 wt% of a styrene-butadiene rubber.

### Example 3

A negative electrode was fabricated according to the same method as Example 1 except for using 88 wt% of the amorphous carbon (SC2, GS Energy Co., Ltd.) having an aspect ratio (a/b) of 1.86, 7 wt% of denka black, 2 wt% of carboxylmethyl cellulose, and 3 wt% of a styrene-butadiene rubber.

### Example 4

A negative electrode was fabricated according to the same method as Example 1 except for using 80 wt% of the amorphous carbon (SC2, GS Energy Co., Ltd.) having an aspect ratio (a/b) of 1.86, 14 wt% of denka black, 3 wt% of carboxylmethyl cellulose, and 3 wt% of a styrene-butadiene rubber.

### Example 5

A negative electrode was fabricated according to the same method as Example 1 except for using 88 wt% of the amorphous carbon (SC3, GS Energy Co., Ltd.) having an aspect ratio (a/b) of 1.22, 7 wt% of denka black, 2 wt% of carboxylmethyl cellulose, and 3 wt% of a styrene-butadiene rubber.

### Example 6

A negative electrode was fabricated according to the same method as Example 1 except for using 80 wt% of the amorphous carbon (SC3, GS Energy Co., Ltd.) having an aspect ratio (a/b) of 1.22, 14 wt% of denka black, 3 wt% of carboxylmethyl cellulose, and 3 wt% of a styrene-butadiene rubber.

### Comparative Example 1

A negative electrode was fabricated according to the same method as Example 1 except for using 88 wt% of the amorphous carbon (SC1, manufactured by BTR) having an aspect ratio (a/b) of 1, 7 wt% of denka black, 2 wt% of carboxylmethyl cellulose, and 3 wt% of a styrene-butadiene rubber.

### Comparative Example 2

A negative electrode was fabricated according to the same method as Example 1 except for using 80 wt% of the amorphous carbon (SC1, manufactured by BTR) having an aspect ratio (a/b) of 1, 14 wt% of denka black, 3 wt% of carboxylmethyl cellulose, and 3 wt% of a styrene-butadiene rubber.

### Evaluation 1: SEM photograph of negative active material

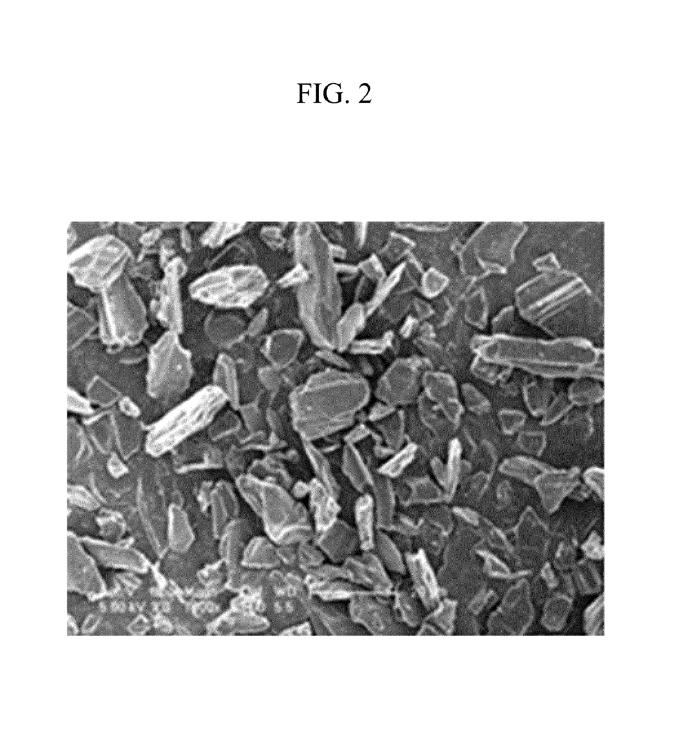

Negative active materials used for the negative electrodes according to Examples 1 to 6 and Comparative Examples 1 and 2 were taken a scanning electronic microscope (SEM). The results are provided in FIGS. 2 to 5.

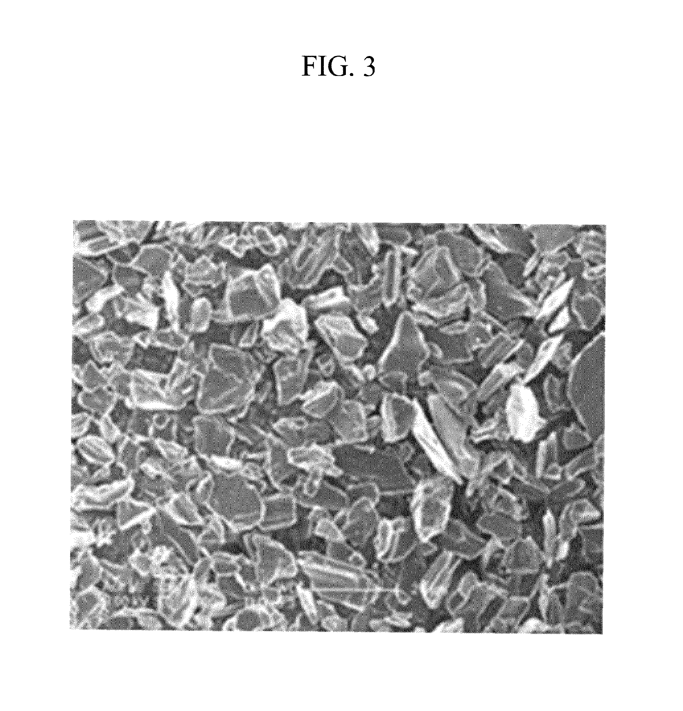

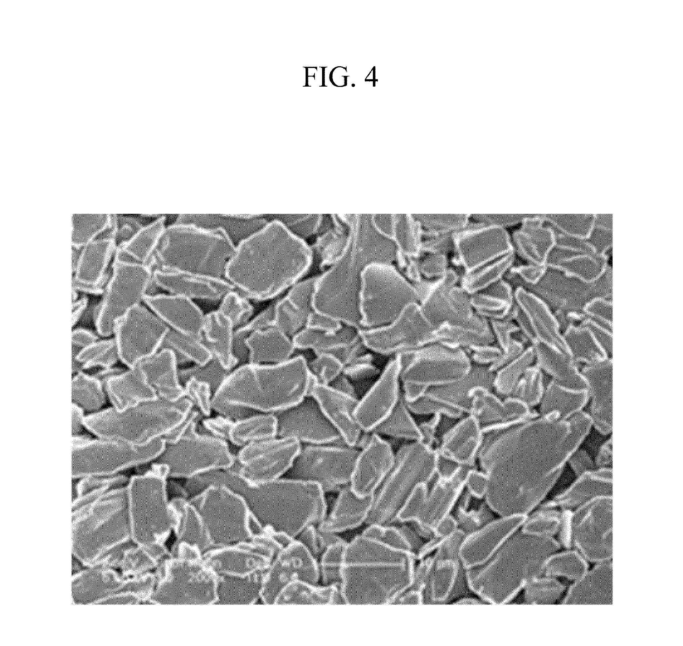

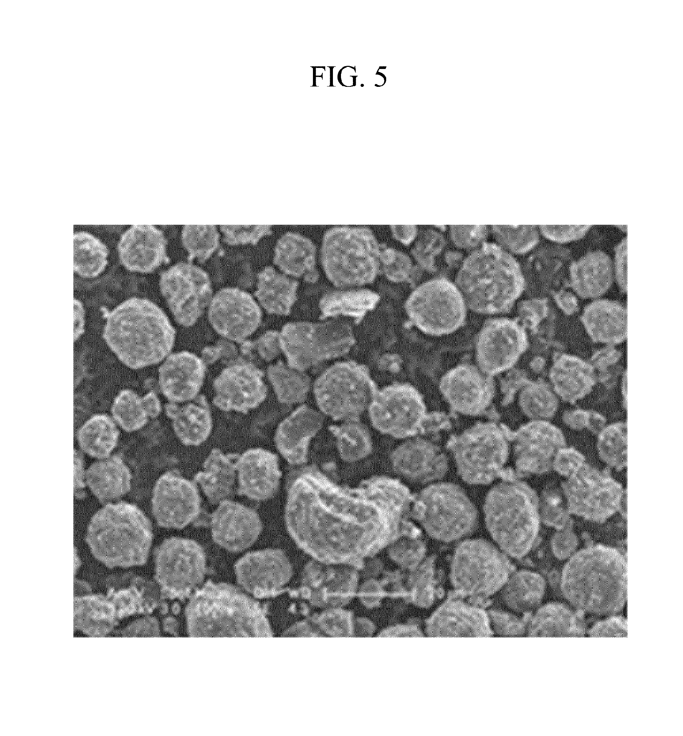

FIG. 2 shows the SEM photograph of the negative active material used in Example 1, FIG. 3 shows the SEM photograph of the negative active material used in Example 3, FIG. 4 shows the SEM photograph of the negative active material used in Example 5, and FIG. 5 shows the SEM photograph of the negative active material used in Comparative Example 1.

Referring to FIGS. 2 to 5, the negative active materials used for the negative electrodes according to Examples 1, 3 and 5 turned out to include amorphous carbon having an aspect ratio of 1.22, 1.86 and 4.

### Fabrication of Rechargeable Lithium Battery Cell

A positive electrode was fabricated by mixing 90 wt% of LiCoO₂, 5 wt% of polyvinylidene fluoride, and 5 wt% of denka black in N-methyl pyrrolidone to prepare a composition for a positive active material layer, coating the composition on an aluminum film current collector, and then, drying and compressing it.

Each negative electrode according to Examples 1 to 6 and Comparative Examples 1 and 2, the positive electrode, and an electrolyte solution were used to fabricate a prismatic battery cell. The electrolyte solution was prepared by mixing ethylenecarbonate (EC), ethylmethylcarbonate (EMC), and dimethylcarbonate (DMC) in a volume ratio of 3:3:4 and dissolving LiPF₆ in a concentration of 1.15M.

### Evaluation 2: Cycle-life characteristic of rechargeable lithium battery cell

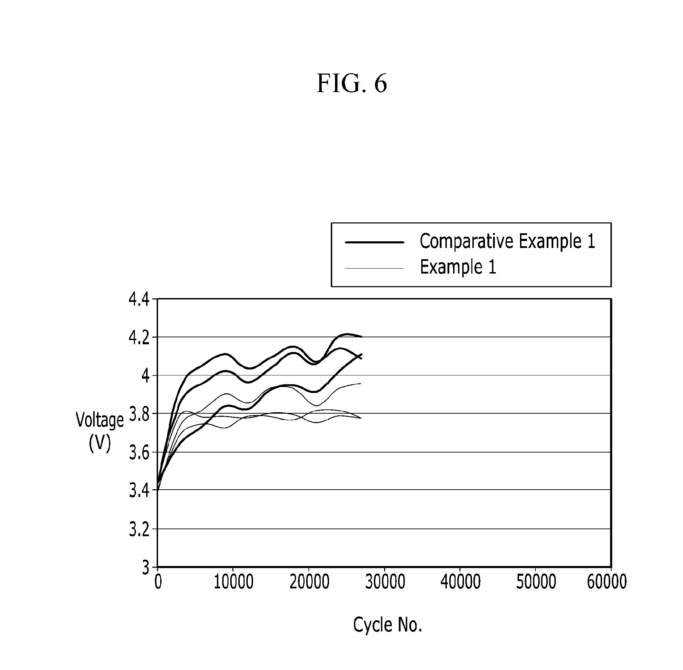

The rechargeable lithium battery cells using the negative electrodes according to Examples 1 to 6 and Comparative Examples 1 and 2 were charged at a rate of 30C up to 4.2V or for 20 seconds and discharged at a rate of 30C down to 2.0V or for 20 seconds as one cycle, and the cycle was 30,000 times repeated. The results are provided in the following Table 1 and FIG. 6.

In the following Table 1, capacity retention (%) of the rechargeable lithium battery cells was obtained as a percentage of discharge capacity at 1000 cycles relative to initial discharge capacity at a rate of 30C.

**[Table 1]**

| | Initial discharge capacity (mAh/g) | Capacity retention (%) at a rate of 30C |
|---|---|---|
| Example 1 | 280 | 97 |
| Example 2 | 280 | 96 |
| Example 3 | 280 | 94 |
| Example 4 | 280 | 93 |
| Example 5 | 280 | 93 |
| Example 6 | 280 | 92 |
| Comparative Example 1 | 253 | 88 |
| Comparative Example 2 | 253 | 88 |

Referring to Table 1, Examples 1 to 6 using amorphous carbon with a an aspect ratio (a/b) with a predetermined range as a negative active material in a predetermined amount range had excellent cycle-life characteristic compared with Comparative Examples 1 and 2 using amorphous carbon with an aspect ratio (a/b) of 1 as a negative active material.

FIG. 6 is a graph showing cycle-life characteristic of the rechargeable lithium battery cells according to Example 1 and Comparative Example 1.

Referring to FIG. 6, the rechargeable lithium battery cell according to Example 1 had good cycle-life characteristic at a lower voltage and thus, higher capacity and better cycle-life characteristic than the one according to Comparative Example 1.

### Evaluation 3: Output characteristic of rechargeable lithium battery cell

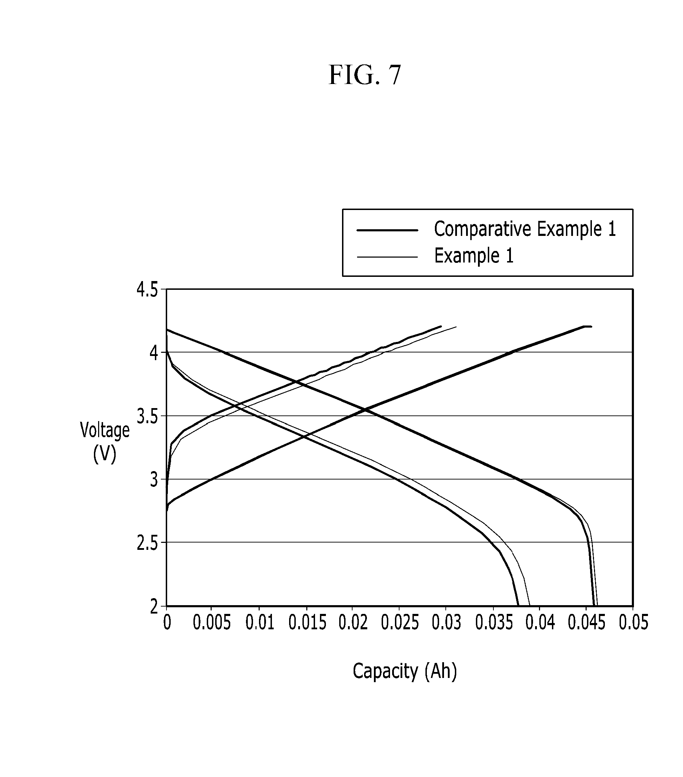

The rechargeable lithium battery cells including the negative electrodes according to Examples 1 to 6 and Comparative Examples 1 and 2 were respectively charged and discharged at a rate of 1C up to 4.2V and then, at a rate of 30C up to 4.2V. The results are provided in the following Table 2 and FIG. 7.

In the following Table 2, the capacity retention (%) of the rechargeable lithium battery cells 1C was obtained as a percentage of discharge capacity at the rate of 30C relative to discharge capacity at the rate of 1C.

**[Table 2]**

| | 30C/1C capacity retention (%) |
|---|---|
| Example 1 | 92 |
| Example 2 | 91 |
| Example 3 | 88 |
| Example 4 | 86 |
| Example 5 | 86 |
| Example 6 | 85 |
| Comparative Example 1 | 84 |
| Comparative Example 2 | 83 |

Referring to Table 2, Examples 1 to 6 using amorphous carbon with an aspect ratio (a/b) within a predetermined range as a negative active material had excellent output characteristic compared with Comparative Examples 1 and 2 using amorphous carbon with an aspect ratio (a/b) of 1.

FIG. 7 is a graph showing output characteristic of the rechargeable lithium battery cells according to Example 1 and Comparative Example 1.

Referring to FIG. 7, Example 1 had small capacity change at the high rate of 30C and excellent high rate characteristic compared with Comparative Example 1.

## Claims

1. A negative electrode for a rechargeable lithium battery comprising:
a current collector; and
a negative active material layer disposed on the current collector, wherein the negative active material layer includes amorphous carbon particles with an aspect ratio (a/b) of a width (a) relative to a length (b) in a range of 1.1 to 6 and in an amount of 55.5 to 99.5 wt% based on the total weight of the negative active material layer.

2. The negative electrode of claim 1, wherein the aspect ratio (a/b) is in a range of 3 to 5.

3. The negative electrode of one of the preceding claims, wherein the amount of the amorphous carbon particles in the negative active material layer is in the range of 70.0 to 95.0 wt% based on the total weight of the negative active material layer, especially in the range of 85.0 to 91.0 wt.% based on the total weight of the negative active material layer.

4. The negative electrode of one of the preceding claims, wherein the amorphous carbon has an interplanar distance d(002) ranging from 3.10 to 3.55 A.

5. The negative electrode of claim 4, wherein the interplanar distance d(002) ranging from 3.40 to 3.55 A.

6. The negative electrode of one of the preceding claims, wherein the amorphous carbon has a lattice constant L_{c} ranging from 10 to 50 A.

7. The negative electrode of claim 6, wherein the lattice constant L_{c} ranging from 10 to 30 A.

8. The negative electrode of one of the preceding claims, wherein the negative active material layer further includes a binder.

9. The negative electrode of claim 8, wherein the amount of the binder in the negative active material layer is in the range of 3.0 to 8.0 wt.% based on the total weight of the negative active material layer.

10. The negative electrode of one of the preceding claims, wherein the negative active material layer further includes a conductive material.

11. The negative electrode of one of claim 10, wherein the amount of the conductive material in the negative active material layer is in the range of 3.0 to 20.0 wt% based on the total weight of the negative active material layer.

12. The negative electrode of one of the preceding claims, wherein the amorphous carbon particles are made of soft carbon.

13. The negative electrode of one of the preceding claims, wherein an average width of the amorphous carbon particles corresponding to 50 volume% of the cumulative volume of the amorphous carbon particles is in the range of 5 - 20 µm.

14. The negative electrode of claim 13, wherein the average width of the amorphous carbon particles is in the range of 7 - 15 µm.

15. A rechargeable lithium battery comprising:
a negative electrode according to one of the preceding claims;
a positive electrode; and
an electrolyte.
